# EUROPEAN PATENT SPECIFICATION

(11) **EP 3 597 456 B1**
(45) Date of publication and mention of the grant of the patent: **10.03.2021**
(21) Application number: 18425054.6
(22) Date of filing: 19.07.2018
(51) Int. Cl.: B60D 1/46, B60D 1/04

(54) **TOWING DRAWBAR FOR VEHICLES**
ZUGDEICHSEL FÜR FAHRZEUGE
BARRE DE REMORQUAGE POUR VÉHICULES

(43) Date of publication of application: 22.01.2020
(73) Proprietor: OMC Axles & Trailers S.r.l., 70026 Modugno (BARI) (IT)
(72) Inventor: Simone, Francesco, 76125 Trani (Barletta-Andria-Trani) (IT)
(74) Representative: Tansini, Elio Fabrizio

(56) References cited:
- DE-A1- 10 052 437
- DE-U1- 20 317 937
- US-A- 3 700 254
- US-A- 4 164 297

## Description

The present invention relates to a towing drawbar for vehicles.

In particular, the present invention relates to a towing drawbar, which can be connected to a respective trailer for vehicles in general, and in general with any type of trailer/caravan towed by a vehicle.

It should be specified that hereinafter the term "trailer" refers to any type of trolley or system towed by a motor vehicle.

Towing drawbars for vehicles must adapt to the various heights of the hooks of the vehicles themselves and therefore usually consist of a horizontal drawbar rigidly connected to the structure of the trailer, an intermediate drawbar, hereunder referred to as articulated arm, and a terminal part provided with the coupling head for coupling to the vehicle.

The coupling head is a toroidal section eye or a spherical head or other system of mechanical interlocking to the hook of the towing vehicle.

The height adjustment of the terminal part is done manually in various ways.

The height adjustment mechanism acts on the articulated arm, by adjusting its inclination relative to the horizontal drawbar.

Depending on the structure of the intermediate arm, there are different adjustment systems.

The easiest height adjustment is generally done manually by using two pairs of HIRTH-type joints - toothed hinges, which block the rotation of the intermediate arm relative to the horizontal drawbar at one end (joint - interlocking) and the rotation of the intermediate arm relative to the terminal part at the other end (joint - interlocking).

The main disadvantage of this solution is that the adjustment takes time and the increase in the overall mass of the trailers causes these drawbars to reach such a size that adjustment can no longer be done by one person only due to the excessive weight of the intermediate arm and of the terminal part.

Another disadvantage is that in order for said drawbars to adequately protrude with respect to the point of attachment of the horizontal drawbar to the frame of the trailer and to reach the 1100 mm coupling heights required by the towing vehicles, they must have large sections resulting in increased costs and weight.

Therefore, alternative adjustment systems able to obviate these disadvantages have been studied over the years.

In particular, one adjustment system is based on the principle of the articulated parallelogram, in which the intermediate arm consists of two arms pivoted inferiorly to the horizontal drawbar and superiorly to the terminal part of the drawbar.

In accordance with a first known solution, for example described in German publications DE10052437A1 and DE1963579A1, a system is provided for constraining the two arms of the parallelogram. This system comprises the insertion of a joint - interlocking, defined by the point of intersection of the diagonals of the parallelogram. In this context, the two arms have appropriate, suitably staggered slots for housing the joint - toothed interlocking in order to adjust the constraint point (intersection) of the diagonals, and consequently the positioning of the two arms of the parallelogram. In other words, depending on the point of intersection, the upper ends of the two arms are lowered or raised, thus determining the height of the system of mechanical interlocking to the hook of the vehicle.

However, this solution has a major drawback caused precisely by the manual action of inserting the locking joint. In fact, it should be noted that in order to insert the joint, the operator must first manually position the two arms relative to each other to determine the desired height and then, by maintaining this position, insert the locking joint. This action is complicated, and especially for large drawbars entails a considerable amount of physical intervention.

Moreover, the height adjustment is a discrete, non-continuous adjustment.

In order to obviate this drawback, adjustment systems have been implemented, which are easier for the operator to activate manually.

Such systems, for example described in German utility model DE9116523U1, comprise using a central tie rod that runs along one diagonal of the articulated parallelogram.

The central tie rod is adjustable in length by means of a screw system operated by a crank located on the outside of the parallelogram. In this context, the crank runs through a slot formed in one of the two arms of the parallelogram in order to adapt according to the position of the arm itself.

Therefore, by shortening the length of the central tie rod - diagonal the terminal part of the drawbar is lowered, on the contrary by acting on the crank to lengthen the tie rod, the terminal part is raised.

However, although this solution is able to simplify the manual operation of the height adjustment system, it also has major drawbacks.

In fact, it should be noted that the entire structure inside the parallelogram is constructionally complex due to the presence of the screw system operated by the crank and operatively active on the central tie rod.

This structural complexity significantly affects the costs for manufacturing the drawbar and its maintenance operations.

Moreover, the presence of the central tie rod along the diagonal of the parallelogram leads to considerable encumbrance and weight right on the most protruding area of the drawbar with respect to the trailer.

Lastly, a further major drawback is due to the position of the crank, which, as described above, comes out of a slot formed in one arm of the parallelogram. In this context, manual intervention is particularly awkward since the operator must adapt to the rotation plane of the crank, which changes during the movement of the parallelogram for height adjustment.

In other words, starting for example from the lowest position of the parallelogram (close to the ground), the operator must bend down to grab the crank, and as the drawbar is raised the operator must also rise to provide continuous action on the crank.

For this reason, this technical solution is also difficult for the operator intervening on the adjustment of the height of the drawbar The document DE 203 17 937 U1 discloses a towing bar according to the preamble of claim 1

The object of the present invention is therefore to solve the problems encountered in the prior art by providing a towing drawbar for vehicles, which overcomes the limitations and drawbacks mentioned above.

In particular, it is an object of the present invention to provide a towing drawbar for vehicles, which is structurally simple, lightweight and easy to manufacture.

A further object of the present invention is to provide a towing drawbar for vehicles, which is height adjustable in a simple and easy way, and without excessive efforts on the part of the operator.

Lastly, another object of the present invention is to provide a towing drawbar for vehicles, which is adjustable in height and extremely versatile in terms of use.

In particular, the present invention relates to a towing drawbar for vehicles comprising a fixed body rigidly engaged with the frame of a trailer, an engagement member, which can be reversibly coupled to a hook of a towing vehicle, and a kinematic mechanism for supporting the engagement member in order to arrange the engagement member itself at a respective height from the ground in relation to the height of said hook.

The kinematic mechanism has an articulated parallelogram comprising two arms, each of which having two opposite ends engaged with the fixed body and the engagement member, respectively. There are also provided movement means for moving the supporting kinematic mechanism in order to define a plurality of operating configurations of the articulated parallelogram corresponding to different heights of the engagement member, the movement means comprising an actuator arranged on the fixed body and operatively active on an extension of a first arm of the parallelogram; said extension extending outside of said parallelogram and away from the end engaging the fixed body and comprising a movable hinge for coupling to said actuator; wherein said movable hinge comprises a pin slidable within an arched groove formed in said fixed body; said movable hinge being moved by said actuator along a substantially curved path defining said operating configurations of the parallelogram.

In this way, the supporting kinematic mechanism is not burdened by the movement systems of the articulated parallelogram, since the members involved in height adjustment are all arranged on the fixed arm and active on an extension of one of the two arms.

The dependent claims correspond to possible embodiments of the invention.

This description is provided with reference to the accompanying figures, also having a purely exemplary and therefore non-limiting purpose, in which:
- Figure 1 shows a perspective view of the drawbar according to the present invention and in accordance with a first embodiment;
- Figure 2 shows a side elevation view of the drawbar in Figure 1, with some parts removed to better illustrate others;
- Figure 3 shows a perspective view of the drawbar according to the present invention and in accordance with a second embodiment; and
- Figure 4 shows a rear perspective view of a technical detail of the drawbar in Figure 3.

With reference to the accompanying figures, the numeral 1 indicates, as a whole, a towing drawbar for vehicles according to the present invention.

It should be specified that the drawbar finds particular application for all trailers, not shown in the accompanying figures since they are of a known type and do not form part of the present invention, which need to be adjusted in height to be coupled to the towing vehicle.

In order to facilitate the operation of the actuator, the use of a weight compensation system is also provided so as to discharge the load weighing on the linear actuator when stationary.

In particular, the present invention finds advantageous application for trailers, which must adapt the distance from the ground of the respective system for coupling to the hook of the towing vehicle according to the height of the aforementioned hook (determined by the type of vehicle itself).

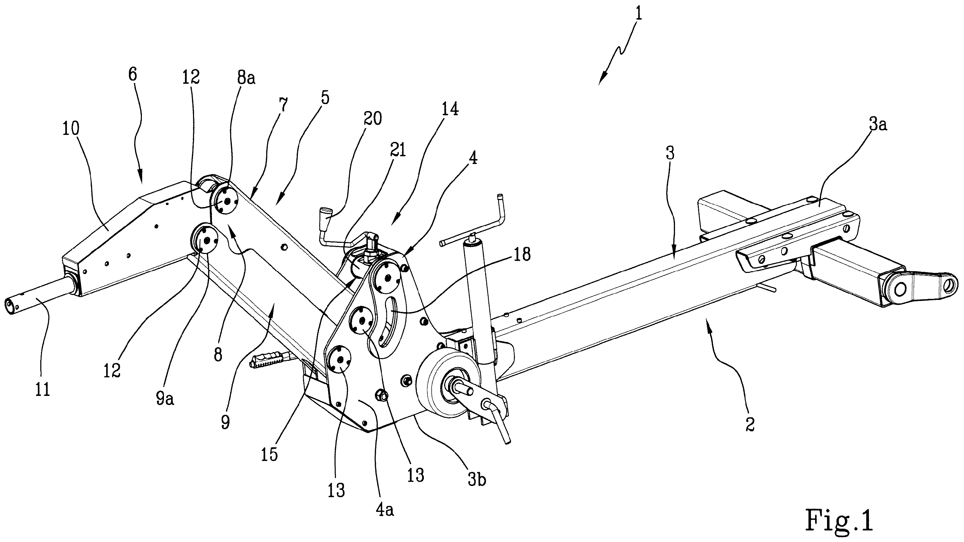

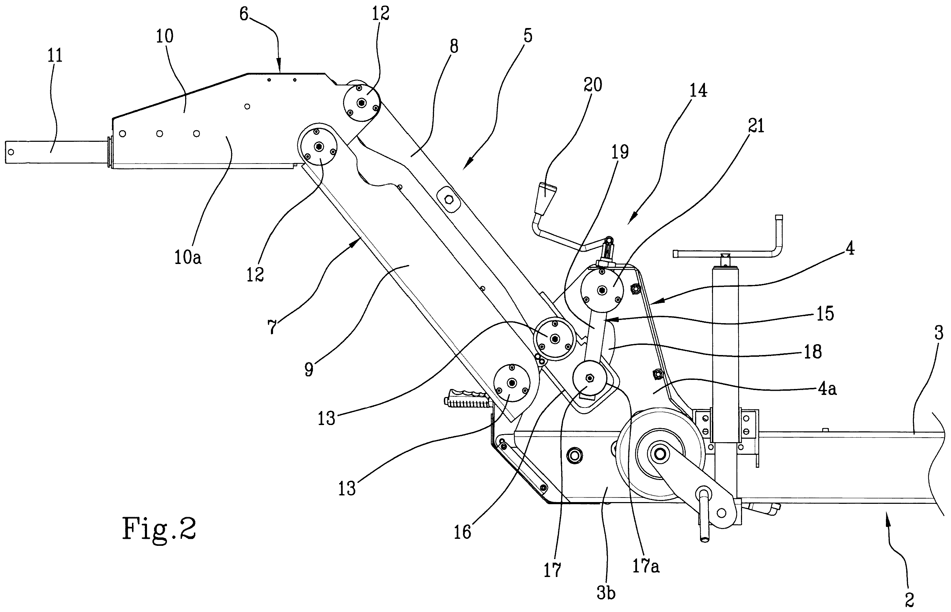

In greater detail, with reference to figures 1 and 2, the drawbar 1 comprises a fixed body (horizontal drawbar) 2 rigidly engaged with the frame of a trailer (not shown) and preferably made in the form of a horizontal bar 3.

The bar 3 has a first end 3a rigidly connected to the trailer frame by suitable coupling systems of the known type, and a second end 3b opposite to the first 3a.

The second end 3b of the bar 3 has a flange 4 joining a supporting kinematic mechanism 5, which will be better described later.

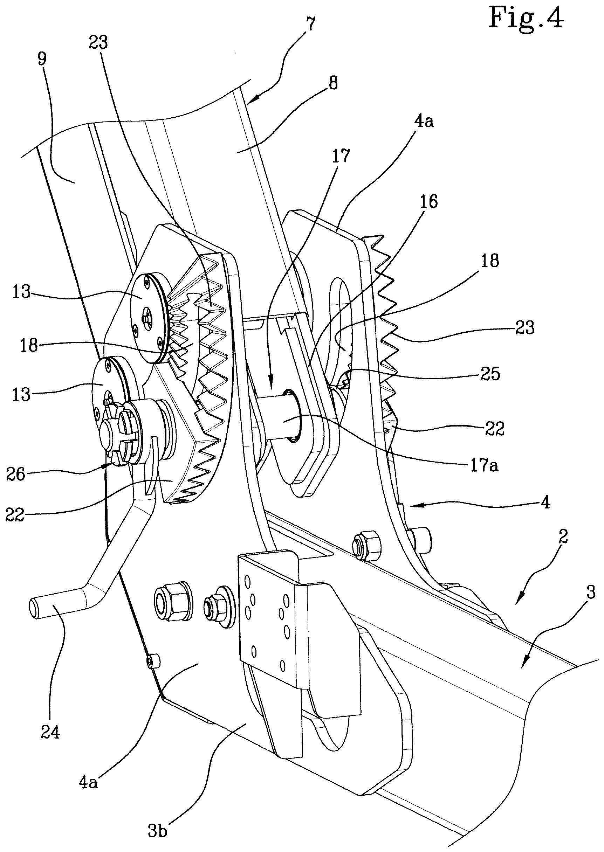

In particular, the flange 4 has two plates 4a fastened to said second end 3b of the bar 3 and extending along respective planes parallel and perpendicular to the ground. The plates 4a are suitably spaced apart, as better visible in figures 1 and 4, to at least partially accommodate the above-mentioned kinematic mechanism 5 designed to support an engagement member 6 reversibly engaging a hook of a towing vehicle (which is not shown since it is of a known type and not part of the present invention).

In particular, the kinematic mechanism 5 supporting the engagement member 6 allows said engagement member 6 to be arranged at a respective height from the ground in relation to the height of the hook. In other words, the kinematic mechanism 5 allows the height of the member 6 to be adapted according to the various requirements and the type of the towing vehicle.

The engagement member 6 preferably has a portion 10 having a substantially box-like shape and configured to support an engagement element 11 engaging the hook, which can for example consist of a towing eye or other similar member suitable to define the releasable engagement with the hook itself.

In the embodiments illustrated in the accompanying figures, the engagement element 11 is shown in the form of a shaft extending horizontally from the portion 10 and configured to support any element (towing eye) to define the aforementioned reversible engagement.

Advantageously, the element 11 can be adapted to any type and tool of reversible engagement with the hook of the towing vehicle and is always oriented parallel to the ground (horizontal) to facilitate coupling to the hook.

As specified above, the portion 10 has a substantially box-like configuration in which two side walls 10a are defined, which lie in respective planes parallel and perpendicular to the ground. The walls 10a are spaced apart like the plates 4a to define a coupling to the kinematic mechanism 5.

The kinematic mechanism 5 has an articulated parallelogram 7 comprising two arms 8, 9, each of which having two opposite ends 8a, 9a, 8b, 9b engaged with the fixed body 2 and the engagement member 6, respectively.

More in particular, each arm 8, 9 of the parallelogram 7 comprises an upper end 8a, 9a engaged with the box-like portion 10 of the engagement member 6, and a lower end 8b, 9b engaged with the flange 4 of the fixed body 2.

Preferably, each upper end 8a, 9a is associated with the portion 10 by means of an upper hinge 12 which is engaged in a fixed manner to the walls 10a. Similarly, each lower end 8b, 9b is associated with the flange 4 by means of a lower hinge 13 which is mounted in a fixed manner on the plates 4a. In this configuration, the articulated parallelogram 7 can rotate the arms 8, 9 relative to the box-like portion 10 and the flange 4 about respective axes parallel to the ground defined by hinges 12, 13. In other words, the hinges define fixed coupling points that allow the arms to rotate in order to change the configuration of the parallelogram 7.

For this purpose, movement means 14 for moving the kinematic mechanism 5 are provided in order to define a plurality of operating configurations of the articulated parallelogram 7 corresponding to different heights of the engagement member 6.

The movement means 14 comprise an actuator 15, which, according to the present invention, is arranged on the fixed body 2 and operatively active on at least one arm 8, 9 of the articulated parallelogram 5.

The actuator 15 is operatively active on an extension 16 of the first arm 8 of the parallelogram 7, which extends outside of said parallelogram 7 defined by the four constraint points and thus by the two upper hinges 12 and the two lower hinges 13.

With particular reference to Figure 2 that shows the drawbar 1 devoid of the plate 4a to better view the actuator 15, it is noted that the extension 16 consists of a segment of the first arm 8 extending beyond the respective lower hinge 13 and towards a direction opposite to the upper hinge 12. In this situation, the extension 16 of the first arm 8 is housed in the bracket 14 between the two plates 4a.

The extension 16 comprises a movable hinge 17 coupled to said actuator 15. In this way, the actuator 15 acts on the hinge 17 for moving the same along a substantially curved path defining the aforementioned operating configurations of the parallelogram 7.

For this purpose, the hinge 17 consists of a pin 17a slidable within an arched groove 18 formed in the flange 4.

In particular, it should be noted that two arched through grooves 18 are provided, which are formed on the plates 4a. In this way, the pin 17a has two opposite ends slidably housed in the respective arched grooves 18.

In accordance with the first embodiment illustrated in figures 1 and 2, the pin 17a preferably consists of a threaded nut which therefore has a threaded through hole arranged between the respective opposite ends.

In this situation, the actuator 15 has a screw 19 inserted in said threaded hole of the pin 17a and is rotatable therein along a respective longitudinal axis.

As a result of the rotation of the screw 19, the pin 17a, which acts as a nut, slides along the screw 29 itself thereby modifying the position of the hinge 17 associated with the extension 16.

Therefore, the first arm 8 is moved and the orientation of the two arms 8, 9 is changed to define the aforementioned operating configurations of the parallelogram 7 corresponding to the height of the member 6.

Still, the rotation of the screw 19 can be actuated manually by means of a crank 20 protruding above the second end 3b of the bar 3.

In particular, the crank 20 extends from the flange 4 to be easily accessible and allow the operator to rotate the screw 19 and change the height of the member 6 from the ground.

Still referring to Figure 2, it should be noted that the screw 19 is rotatably associated with the plates 4a along an axis perpendicular to the respective longitudinal axis. For this purpose, the screw is supported by a bush 21, which is rotatably associated between the plates 4a and allows the screw 19, during its rotation along the longitudinal axis, to orient itself with respect to the hinge 17.

In other words, during the sliding of the movable hinge 17 along the respective curved path in which the parallelogram 7 is configured in the operating conditions, the screw 19 is oriented so that it adapts to the movement of the hinge 17.

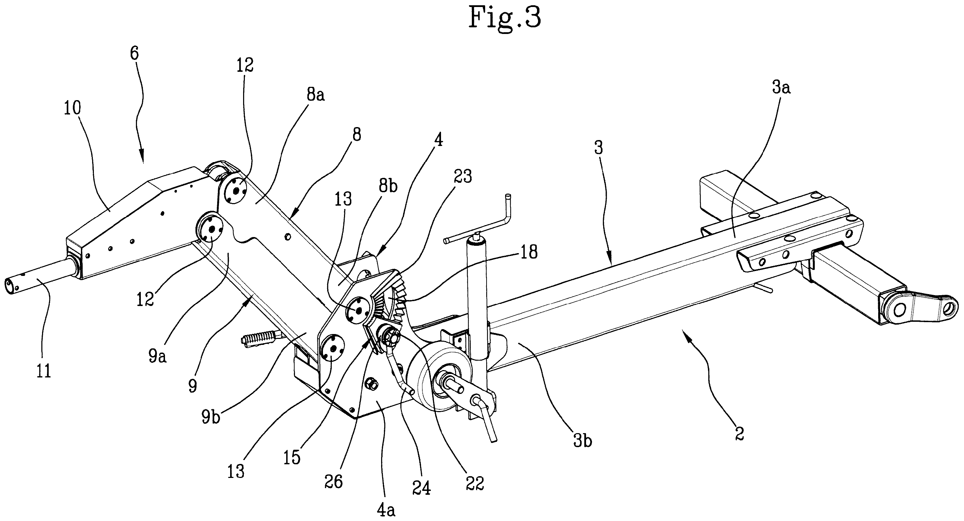

In accordance with the second embodiment of figures 3 and 4, the pin 17a is provided with at least one toothed plate 22 slidable along the longitudinal extension of the pin 17a itself between a disengagement condition (not shown), in which the plate 22 is separated from the arched groove 18 and the parallelogram 7 is manually movable into the respective operating conditions, and an engagement condition (shown in the figures), in which the plate 22 is alongside the groove 18 and the parallelogram 7 is constrained in a respective operating condition.

The actuator 15 has a toothed edge 23 extending around the arched groove 18. In this way, the toothed plate 22 in the engagement condition has the respective toothing in contact with the edge 23 to define a mechanical interlocking that constrains the position of the two arms 8, 9 of the parallelogram 7.

The movement of the toothed plate 22 is carried out manually by a gripping element 24, which extends from the pin 17a and operates by releasing the plate 22 from the groove 18.

More in particular, as is better illustrated in the rear view of Figure 4, the pin 17a comprises two toothed plates 22 arranged at the ends of the pin 17a itself. The toothed plates 22 are slidable along the longitudinal extension of the pin 17a towards/away from each other so as to define the aforementioned engagement/disengagement conditions.

In this situation, it should be noted that two toothed edges 23 are provided, each of which is arranged around a respective arched groove 18 through which the pin 17a extends.

Therefore, the movement of the plates 22 along the pin 17a and away from each other defines the above-mentioned disengagement condition, whereas the engagement condition is implemented when the plates are moved towards each other.

Preferably, thrust helical springs 25 are provided around the pin 17a between the flange 4 and the respective toothed plate 22 in order to facilitate the separating action. The springs 25 arranged at the ends of the pin 17a push the toothed plates 22 away from the edge 23 to define the disengagement condition in which the parallelogram 7 can be moved.

A roto-translation member 26 is further provided at the gripping element 24, which transforms the rotary motion of the gripping element 24 into a linear motion of the toothed plates 22. For example, the roto-translation member 26 can be a cam joint or other technically equivalent system. In this way, the element 24 is manually operated to rotate starting from an engagement condition, in which the toothed plates 22 are in contact with the edge 23 and the springs 25 are compressed. This movement releases the plates 22, which, due to the compression action of the springs 25, are moved away into the engagement condition.

Advantageously, in accordance with this second embodiment, height adjustment from the ground is carried out in a discrete manner and acting on the teeth that define individual operating conditions of the parallelogram 7.

Instead, in the first embodiment of figures 1 and 2, the adjustment is carried out according to the rotation of the crank imparted by the operator.

Therefore, the present invention solves the drawbacks of the prior art and gives major advantages.

In the first place, it should be noted that the drawbar 1 is structurally simple, lightweight and easy to implement.

In fact, the positioning of the movement means 14 for moving the kinematic mechanism 5 allows the structure of the kinematic mechanism 5 itself, that is to say of the articulated parallelogram 7, to be simplified.

It should be noted in this respect that the actuator 15 is arranged on the fixed body 2, therefore at the end of the bar 3, to avoid burdening the movable portion of the entire drawbar 1.

This configuration, which provides for the extension of an arm 8, makes the entire structure simpler and with highly reduced encumbrance and dimensions.

In addition, the positioning of the actuator 15 on the fixed body 2 facilitates the manual adjustment operations to be carried out by the operator.

In fact, for both embodiments, the adjustment operations comprise simply rotating a crank, thus without excessive efforts on the part of the operator.

Even during the height adjustment action, the crank always remains in a position easily accessible to the operator.

Lastly, the drawbar 1 is height adjustable and extremely versatile in terms of use, since it is applicable to any type of trailer and adaptable to any hook of a towing vehicle.

## Claims

1. A towing drawbar for vehicles, comprising:
- a fixed body (2) rigidly engageable with the frame of a trailer;
- an engagement member (6), which can be reversibly coupled to a hook of a towing vehicle;
- a kinematic mechanism (5) for supporting the engagement member (6) in order to arrange the engagement member (6) itself at a given height from the ground in relation to the height of said hook, said kinematic mechanism (5) having an articulated parallelogram (7) comprising two arms (8, 9), each of which has two opposite ends (8a, 8b, 9a, 9b) engaged with the fixed body (2) and the engagement member (6), respectively; and
- movement means (14) for moving said kinematic mechanism (5) in order to define a plurality of operating configurations of the articulated parallelogram (7) corresponding to different heights of the engagement member (6);
said movement means (14) comprise an actuator (15) arranged on the fixed body (2) and operatively active on an extension (16) of a first arm (8) of the parallelogram (7); said extension (16) extending outside of said parallelogram (7) and away from the end (8b) engaging the fixed body (2) and comprising a movable hinge (17) for coupling to said actuator (15);
**characterised in that** said movable hinge (17) comprises a pin (17a) slidable within an arched groove (18) formed in said fixed body (2); said movable hinge (17) being moved by said actuator (15) along a substantially curved path defining said operating configurations of the parallelogram (7).

2. The drawbar according to the preceding claim, **characterised in that** said first arm (8) of the parallelogram (7) comprises at said ends (8a, 8b) an upper hinge (12) engaged with said engagement member (6) and a lower hinge (13) engaged with said fixed body (2); said extension (16) extending from said lower hinge (13) towards a direction opposite to the upper hinge (12).

3. The drawbar according to claim 2, **characterised in that** a second arm (9) of the articulated parallelogram (7) comprises at said ends (9a, 9b) an upper hinge (12) engaged with said engagement member (6) and a lower hinge (13) engaged with said fixed body (2); said upper and lower hinges (12, 13) of the first and the second arm (8, 9) being fixed.

4. The drawbar according to the preceding claim, **characterised in that** said actuator (15) can be actuated manually to slide the pin (17a) within the groove (18) and define said operating configurations of the parallelogram (7).

5. The drawbar according to claim 4, **characterised in that** said pin (17a) consists of a threaded nut and said actuator (15) comprises a screw (19) inserted in said nut and rotatable therein along a respective longitudinal axis; said nut being slidable along the screw (19) to define said operating configurations of the parallelogram (7).

6. The drawbar according to the preceding claim, **characterised in that** said screw (19) is rotatably associated with said fixed body (2) along an axis transverse to said longitudinal axis; said screw (19) having a crank (20) for manually imparting the rotation of the screw itself around the longitudinal axis.

7. The drawbar according to claim 4, **characterised in that** said pin (17a) comprises at least one toothed plate (22) slidable along the longitudinal extension of the pin (17a) itself between a disengagement condition, in which the plate is separated from the arched groove (18) and the parallelogram (7) is manually movable into the respective operating conditions, and an engagement condition, in which the plate (22) is alongside the groove (18) and the parallelogram (7) is constrained in a respective condition.

8. The drawbar according to the preceding claim, **characterised in that** said actuator (15) comprises a toothed edge (23) surrounding said groove (18); said plate (22) in the engagement condition has the toothing in contact with the toothed edge (23) so that they are mutually constrained.

9. The drawbar according to the preceding claim, **characterised in that** said actuator (15) comprises a gripping element (24) extending from said pin (17a) to move the toothed plate (22) towards or away from the groove (18).

10. The drawbar according to the preceding claim, **characterised in that** said pin comprises two toothed plates (22) arranged at the ends of the pin (17a) and slidable along the longitudinal extension of the pin (17a) itself towards/away from each other so as to define said engagement/disengagement conditions; said fixed body (2) having a pair of grooves (18) through which the pin (17a) extends and each of which having a toothed edge (23) for coupling to a respective toothed plate (22).

## Patentansprüche

1. Zugdeichsel für Fahrzeuge, umfassend:
- einen festen Körper (2), der fest mit dem Rahmen eines Anhängers eingriffbar ist;
- ein Eingriffsglied (6), das reversibel an einen Haken eines Zugfahrzeuges gekoppelt werden kann;
- einen kinematischen Mechanismus (5) zur Abstützung des Eingriffsglieds (6), um das Eingriffsglied (6) in einer bestimmten Höhe vom Boden in Bezug auf die Höhe des Hakens anzuordnen, wobei der kinematische Mechanismus (5) ein Gelenkparallelogramm (7) aufweist, das zwei Arme (8, 9) umfasst, von denen ein jeder zwei gegenüberliegende Enden (8a, 8b, 9a, 9b), die jeweils mit dem festen Körper (2) und dem Eingriffsglied (6) eingegriffen sind, aufweist; und
- Bewegungsmittel (14) für die Bewegung des kinematischen Mechanismus (5), um eine Vielzahl an Betriebskonfigurationen des Gelenkparallelogramms (7) zu definieren, die unterschiedlichen Höhen des Eingriffslied (6) entsprechen;
die Bewegungsmittel (14) umfassen einen auf dem festen Körper (2) angeordneten und auf einer Ausdehnung (16) eines ersten Arms (8) des Parallelogramms (7) betriebswirksam aktiven Stellantrieb (15); wobei die Ausdehnung (16) sich außerhalb des Parallelogramms (7) und vom Ende (8b) wegführend erstreckt, das den festen Körper (2) eingrifft und ein bewegliches Scharnier (17) zur Kopplung an den Stellantrieb (15) umfasst;
**dadurch gekennzeichnet, dass** das bewegliche Scharnier (17) einen Stift (17a) umfasst, der innerhalb einer gewölbten Nut (18), die in dem festen Körper (2) ausgebildet ist, verschiebbar ist; wobei das bewegliche Scharnier (17) durch den Stellantrieb (15) entlang eines im Wesentlichen gekrümmten Pfades bewegt wird, wodurch die Betriebskonfigurationen des Parallelogramms (7) definiert werden.

2. Deichsel nach dem vorhergehenden Anspruch, **dadurch gekennzeichnet, dass** der erste Arm (8) des Parallelogramms (7) an den Enden (8a, 8b) ein oberes Scharnier (12), das mit dem Eingriffsglied (6) eingegriffen ist und ein unteres Scharnier (13), das mit dem festen Körper (2) eingegriffen ist, umfasst; wobei die Ausdehnung (16) sich vom unteren Scharnier (13) in eine Richtung, die dem oberen Scharnier (12) entgegengesetzt ist, erstreckt.

3. Deichsel nach Anspruch 2, **dadurch gekennzeichnet, dass** ein zweiter Arm (9) des Gelenkparallelogramms (7) an den Enden (9a, 9b) ein oberes Scharnier (12), das mit dem Eingriffsglied (6) eingegriffen ist und ein unteres Scharnier (13), das mit dem festen Körper (2) eingegriffen ist, umfasst; wobei das obere und untere Scharnier (12, 13) des ersten und des zweiten Arms (8, 9) feststehend sind.

4. Deichsel nach dem vorhergehenden Anspruch, **dadurch gekennzeichnet, dass** der Stellantrieb (15) manuell betätigt werden kann, um den Stift (17a) innerhalb der Nut (18) zu verschieben und die Betriebskonfigurationen des Parallelogramms (7) zu definieren.

5. Deichsel nach Anspruch 4, **dadurch gekennzeichnet, dass** der Stift (17a) aus einer Gewindemutter besteht und der Stellantrieb (15) eine Schraube (19), die in die Mutter eingesetzt und in dieser entlang einer jeweiligen Längsachse drehbar ist, umfasst; wobei die Mutter entlang der Schraube (19) verschiebbar ist, um die Betriebskonfigurationen des Parallelogramms (7) zu definieren.

6. Deichsel nach dem vorhergehenden Anspruch, **dadurch gekennzeichnet, dass** die Schraube (19) mit dem festen Körper (2) entlang einer Achse quer zur Längsachse drehbar assoziiert ist; wobei die Schraube (19) eine Kurbel (20) zur Vermittlung der Drehung der Schraube um die Längsachse aufweist.

7. Deichsel nach Anspruch 4, **dadurch gekennzeichnet, dass** der Stift (17a) mindestens eine Zahnplatte (22) umfasst, die entlang der Längsausdehnung des Stifts (17a) zwischen einem Lösezustand, in dem die Platte von der gewölbten Nut (18) getrennt ist und das Parallelogramm (7) manuell in die jeweiligen Betriebszustände bewegbar ist, und einem Eingriffszustand, in dem die Platte (22) neben der Nut (18) steht und das Parallelogramm (7) in einem jeweiligen Zustand fest verbunden ist, verschiebbar ist.

8. Deichsel nach dem vorhergehenden Anspruch, **dadurch gekennzeichnet, dass** der Stellantrieb (15) eine Zahnkante (23), die die Nut (18) umgibt, umfasst; die Platte (22) im Eingriffszustand weist die Verzahnung in Kontakt mit der Zahnkante (23) auf, so dass sie sich gegenseitig fest verbinden.

9. Deichsel nach dem vorhergehenden Anspruch, **dadurch gekennzeichnet, dass** der Stellantrieb (15) ein Greifelement (24) umfasst, das sich aus dem Stift (17a) erstreckt, um die Zahnplatte (22) hin- oder wegführend zu/von der Nut (18) zu bewegen.

10. Deichsel nach dem vorhergehenden Anspruch, **dadurch gekennzeichnet, dass** der Stift zwei Zahnplatten (22) umfasst, die an den Enden des Stifts (17a) angeordnet und entlang der Längsausdehnung des Stifts (17a) hin- oder wegführend zu-/voneinander verschiebbar sind, um die Eingriffs-/Lösezustände zu definieren; wobei der feste Körper (2) ein Paar Nuten (18) aufweist, durch die der Stift (17a) sich erstreckt, und von denen ein jeder eine Zahnkante (23) zur Kopplung an eine jeweilige Zahnplatte (22) aufweist.

## Revendications

1. Barre de remorquage pour véhicules, comprenant :
- un corps fixe (2) pouvant être mis en prise de manière rigide avec le châssis d'une remorque ;
- un élément de mise en prise (6) pouvant être couplé de manière réversible à un crochet d'un véhicule tracteur ;
- un mécanisme cinématique (5) servant à supporter l'élément de mise en prise (6) afin de disposer l'élément de mise en prise (6) lui-même à une hauteur donnée du sol par rapport à la hauteur dudit crochet, ledit mécanisme cinématique (5) comportant un parallélogramme articulé (7) comprenant deux bras (8, 9) dont chacun comporte deux extrémités opposées (8a, 8b, 9a, 9b) mises en prise, respectivement, avec le corps fixe (2) et l'élément de mise en prise (6) ; et
- des moyens de déplacement (14) servant à déplacer ledit mécanisme cinématique (5) afin de définir une pluralité de configurations de fonctionnement du parallélogramme articulé (7) correspondant à différentes hauteurs de l'élément de mise en prise (6) ;
lesdits moyens de déplacement (14) comprennent un actionneur (15) disposé sur le corps fixe (2) et actif de manière fonctionnelle sur une extension (16) d'un premier bras (8) du parallélogramme (7) ; ladite extension (16) se prolongeant à l'extérieur dudit parallélogramme (7) et en s'éloignant de l'extrémité (8b) se mettant en prise avec le corps fixe (2) et comprenant une charnière mobile (17) servant au couplage audit actionneur (15) ;
**caractérisée en ce que** ladite charnière mobile (17) comprend un axe (17a) pouvant coulisser dans une rainure arquée (18) formée dans ledit corps fixe (2) ; ladite charnière mobile (17) étant déplacée par ledit actionneur (15) le long d'une trajectoire substantiellement courbe définissant lesdites configurations de fonctionnement du parallélogramme (7).

2. Barre de remorquage selon la revendication précédente, **caractérisée en ce que** ledit premier bras (8) du parallélogramme (7) comprend auxdites extrémités (8a, 8b) une charnière supérieure (12) mise en prise avec ledit élément de mise en prise (6) et une charnière inférieure (13) mise en prise avec ledit corps fixe (2) ; ladite extension (16) se prolongeant de ladite charnière inférieure (13) vers une direction opposée à la charnière supérieure (12).

3. Barre de remorquage selon la revendication 2, **caractérisée en ce qu'**un second bras (9) du parallélogramme articulé (7) comprend auxdites extrémités (9a, 9b) une charnière supérieure (12) mise en prise avec ledit élément de mise en prise (6) et une charnière inférieure (13) mise en prise avec ledit corps fixe (2) ; lesdites charnières supérieure et inférieure (12, 13) du premier et du second bras (8, 9) étant fixes.

4. Barre de remorquage selon la revendication précédente, **caractérisée en ce que** ledit actionneur (15) peut être actionné manuellement pour faire coulisser l'axe (17a) à l'intérieur de la rainure (18) et définir lesdites configurations de fonctionnement du parallélogramme (7).

5. Barre de remorquage selon la revendication 4, **caractérisée en ce que** ledit axe (17a) est constitué d'un écrou fileté et ledit actionneur (15) comprend une vis (19) introduite dans ledit écrou et pouvant tourner dans celui-ci le long d'un axe longitudinal respectif ; ledit écrou pouvant coulisser le long de la vis (19) pour définir lesdites configurations de fonctionnement du parallélogramme (7).

6. Barre de remorquage selon la revendication précédente, **caractérisée en ce que** ladite vis (19) est associée de manière rotative audit corps fixe (2) le long d'un axe transversal audit axe longitudinal ; ladite vis (19) comportant un vilebrequin (20) pour conférer manuellement la rotation de la vis elle-même autour de l'axe longitudinal.

7. Barre de remorquage selon la revendication 4, **caractérisée en ce que** ledit axe (17a) comprend au moins une plaque dentée (22) pouvant coulisser le long de l'extension longitudinale de l'axe (17a) lui-même entre une condition de désengagement, dans laquelle la plaque est séparée de la rainure arquée (18) et le parallélogramme (7) est mobile manuellement dans les conditions de fonctionnement respectives, et une condition d'engagement, dans laquelle la plaque (22) se trouve le long de la rainure (18) et le parallélogramme (7) est retenu dans une condition respective.

8. Barre de remorquage selon la revendication précédente, **caractérisée en ce que** ledit actionneur (15) comprend un bord denté (23) entourant ladite rainure (18) ; ladite plaque (22) dans la condition d'engagement a la denture en contact avec le bord denté (23) de sorte qu'ils sont mutuellement solidaires.

9. Barre de remorquage selon la revendication précédente, **caractérisée en ce que** ledit actionneur (15) comprend un élément de préhension (24) se prolongeant à partir dudit axe (17a) pour rapprocher ou éloigner la plaque dentée (22) de la rainure (18).

10. Barre de remorquage selon la revendication précédente, **caractérisée en ce que** ledit axe comprend deux plaques dentées (22) disposées aux extrémités de l'axe (17a) et pouvant coulisser le long de l'extension longitudinale de l'axe (17a) lui-même en s'approchant/s'éloignant l'une de l'autre de manière à définir lesdites conditions d'engagement/désengagement ; ledit corps fixe (2) comportant une paire de rainures (18) à travers lesquelles l'axe (17a) se prolonge et dont chacune possède un bord denté (23) pour le couplage à une plaque dentée respective (22).
